# EUROPÄISCHE PATENTANMELDUNG

(11) **EP 3 883 040 A1**
(43) Veröffentlichungstag der Anmeldung: **22.09.2021**
(21) Anmeldenummer: 20164192.5
(22) Anmeldetag: 19.03.2020
(51) Int. Cl.: H01M 10/48, H01M 2/34, G01L 1/20

(54) **POUCHZELLENANORDNUNG**

(71) Anmelder: Hilti Aktiengesellschaft, 9494 Schaan (LI)
(72) Erfinder: Landesfeind, Johannes, 82407 Wielenbach (DE)
(74) Vertreter: Hilti Aktiengesellschaft Corporate Intellectual Property

(57) **Zusammenfassung**

Pouchzellenanordnung mit wenigstens einer Pouchzelle, wobei die Pouchzellenanordnung wenigstens eine druckempfindliche Sensorfolie, insbesondere eine druckempfindliche leitfähige Folie (pressure-sensitive conductive sheet) aufweist, die die Pouchzelle zumindest abschnittsweise derart umgibt oder begrenzt, dass ein Aufblähen der Pouchzelle ein Komprimieren der Sensorfolie und somit eine Änderung eines elektrischen Widerstands der Sensorfolie bewirkt.

## Beschreibung

Die vorliegende Erfindung betrifft eine Pouchzellenanordnung mit wenigstens einer Pouchzelle.

Pouchzellenanordnungen sowie Pouchzellen sind grundsätzlich aus dem Stand der Technik bekannt. Ebenfalls aus dem Stand der Technik bekannt ist das unerwünschte Phänomen des sogenannten Swellings, auch Ausdehnen oder Aufblähen genannt. Typischerweise entstehen beim Betrieb von Lithium-lonen-Zellen Gas. Bei Zellformaten ohne harte Außenhülle (beispielsweise bei Pouchzellen) kann dies dazu führen, dass der ursprünglich vorhandene atmosphärische Druck verloren geht und die Performance der Zelle leidet. Bei zu viel Gasentwicklung kann der Innendruck der Zelle schließlich so hoch werden, dass die Außenhülle der Pouchzelle aufplatzt.

Es ist Aufgabe der vorliegenden Erfindung eine Pouchzellenanordnung zu schaffen, die die Grundlage für eine erhöhte Betriebssicherheit bietet.

Die Aufgabe wird dadurch gelöst, dass die Pouchzellenanordnung wenigstens eine druckempfindliche Sensorfolie, insbesondere eine druckempfindliche leitfähige Folie (pressure-sensitive conductive sheet) aufweist, die die Pouchzelle zumindest abschnittsweise derart umgibt oder begrenzt, dass ein Aufblähen der Pouchzelle ein Komprimieren der Sensorfolie und somit eine Änderung eines elektrischen Widerstands der Sensorfolie bewirkt.

Das erfindungsgemäß vorgesehene Filament bietet die Grundlage für ein effektives Erfassungs-oder Überwachungssystem, mittels dem ein Swelling ein oder mehrerer Pouchzellen in einer Pouchzellenanordnung und/oder in einem Akkupack festgestellt werden kann. Somit kann einem Aufplatzen der Zelle durch frühzeitig Detektion entgegengewirkt werden.

Die Erfindung schliesst die Erkenntnis ein, dass konventionelle Detektionsmöglichkeiten wie beispielsweise diskrete Drucksensor impraktikabel, weil zu teuer sind. Erfindungsgemäß kommt eine einfache und vergleichsweise kostengünstige druckempfindliche Sensorfolie, insbesondere eine druckempfindliche leitfähige Folie (pressure-sensitive conductive sheet) zum Einsatz. Ein Swelling ein oder mehrerer Pouchzellen kann vorzugsweise durch eine Widerstandsänderung der Sensorfolie bei Druckaufbau detektiert werden.

In einer besonders bevorzugten Ausgestaltung ist die Sensorfolie als industrierußbeschichtete (carbon black) Polymerfolie bereitgestellt. Die Polymerfolie ist vorzugsweise eine Polyethylen-, Polypropylen- oder Polymethylpenten-Folie. In einer besonders bevorzugten Ausgestaltung weist die Sensorfolie einen Schichtwiderstand von weniger als 4x10E5 Ohm/sq, vorzugsweise weniger als 1x10E5 Ohm/sq auf. In einer besonders bevorzugten Ausgestaltung liegt der Schichtwiderstand der Sensorfolie zwischen 1x10E3 und 1x10E5 Ohm/sq. Besonders bevorzugt weist die Sensorfolie in komprimiertem Zustand einen geringeren Schichtwiderstand als in nicht-komprimierten Zustand auf.

Es hat sich als vorteilhaft herausgestellt, wenn die Pouchzellenanordnung einen starr ausgebildeten Rahmen aufweist. Vorzugsweise ist die Sensorfolie einerseits gegen den Rahmen und andererseits gegen die Pouchzelle abgestützt. Der starr ausgebildete Rahmen bildet vorteilhafterweise einen "Gegenanschlag", so dass ein Druckeintrag von einer aufquellenden Pouchzelle in die Sensorfolie verstärkt wird.

In einer besonders bevorzugten Ausgestaltung weist die Pouchzellenanordnung ein Druckausgleichselement auf, das zumindest zwischen der Pouchzelle und der Sensorfolie sandwichartig angeordnet ist. Alternativ oder zusätzlich kann die Sensorfolie in das Druckausgleichselement eingebettet sein. Alternativ oder zusätzlich kann das Druckausgleichselement zwischen dem Rahmen und der Sensorfolie positioniert sein. Es hat sich als vorteilhaft herausgestellt, wenn das Druckausgleichselement als Druckausgleichsfolie bereitgestellt ist. Durch ein Druckausgleichselement kann vorteilhafterweise ein ungleichmäßiger Druck auf eine Pouchzelle verhindert und so eine beschleunigte Zellalterung vermindert werden.

In einer besonders bevorzugten Ausgestaltung ist eine Mehrzahl von Sensorfolien vorgesehen. Vorzugsweise sind diese an verschiedenen Positionen der Pouchzelle angeordnet um zusätzliche Informationen über eine Druckverteilung über eine Zellenoberfläche der Pouchzelle zu erhalten.

In einer besonders bevorzugten Ausgestaltung ist die Sensorfolie Teil einer Aluminiumverbundfolie der Pouchzellenanordnung. Mit anderen Worten kann die Sensorfolie in einer "herkömmliche" Aluminiumverbundfolie (beispielsweise Polyamid/Aluminium/Polypropylen) integriert sein. Vorteilhafterweise kann so synergetisch bei der Zellassemblierung (Tiefziehen und Verschweißen der Aluminiumverbundfolie) die Sensorfolie eingebracht werden, nämlich als Teil der Aluminiumverbundfolie selbst. Es hat sich als vorteilhaft herausgestellt, wenn die Pouchzelle in der Aluminiumverbundfolie eingeschweißt ist.

In einer besonders bevorzugten Ausgestaltung ist der Pouchzellenanordnung ein Sensorschaltkreis zugeordnet, mittels dem ein Komprimieren der Sensorfolie detektiert werden kann. Bevorzugt ist der Sensorschaltkreis ausgebildet, eine Widerstandsänderung (vorzugsweise Schichtwiderstand) der Sensorfolie elektrisch auszuwerten, wobei die Sensorfolie in komprimiertem Zustand (aufgequollene Pouchzelle) einen geringeren Schichtwiderstand als in nicht-komprimierten Zustand (Neuzustand der Pouchzelle) aufweist. Der Sensorschaltkreis kann ausgebildet sein eine Widerstandsänderung der Pouchzelle kontinuierlich oder lediglich bei bestimmten Zuständen (während Betrieb, in Ruhe, beim Laden etc.) zu überwachen. Der Sensorschaltkreis kann von der Pouchzellenanordnung umfasst sein.

In einer weiteren besonders bevorzugten Ausgestaltung ist der Pouchzellenanordnung ein Steuerschaltkreis zugeordnet, der, wenn der Sensorschaltkreis ein Komprimieren der Sensorfolie detektiert hat, eine Stromentnahme aus der Pouchzellenanordnung oder der Pouchzelle unterbricht oder reduziert. Der Steuerschaltkreis kann von der Pouchzellenanordnung umfasst sein.

Der Sensorschaltkreis und/oder der Steuerschaltkreis können Teil eines Batteriemanagementsystems (BMS) einer elektrischen Handwerkzeugmaschine sein. Es hat sich als vorteilhaft herausgestellt, wenn der Sensorschaltkreis etwaige Messdaten (wie beispielsweise den Schichtwiderstand der Sensorfolie) zeitlich gemittelt oder gefiltert an den Steuerschaltkreis übermittelt, so dass beispielsweise ein unbeabsichtigtes Abschalten (beispielsweise lediglich zeitweises Aufschwellen der Pouchzelle durch zeitweisen Transport im Flugzeug) der Pouchzellenanordnung verhindert werden kann.

Es hat sich als vorteilhaft herausgestellt, wenn die Pouchzellenanordnung eine Mehrzahl von Pouchzellen aufweist, die vorzugsweise jeweils zumindest von einer eigenen Sensorfolie umgeben oder begrenzt sind. Alternativ kann die Pouchzellenanordnung eine Mehrzahl von Pouchzellen aufweist, denen eine gemeinsame Sensorfolie zugeordnet ist. Die Sensorfolie kann oberhalb und/oder zwischen den Pouchzellen angeordnet sein.

Vorzugsweise ist die Pouchzelle ein Lithium-lonen-Akkumulator. Eine Pouchzelle kann ein oder mehrere Einzelzellen enthalten.

Gemäß einem weiteren Erfindungsaspekt wir ein Akkupack für eine elektrische Handwerkzeugmaschine bereitgestellt, wobei der Akkupack mit wenigstens einer Pouchzellenanordnung der vorbeschriebenen Art ausgestattet ist.

Ein eigenständig schutzfähiger Gegenstand ist die Verwendung einer Sensorfolie, insbesondere einer druckempfindlichen leitfähigen Folie (pressure-sensitive conductive sheet) als Pouchfolie einer Pouchzellenanordnung, wobei die Sensorfolie vorzugsweise Teil einer Aluminiumverbundfolie ist. Dieser eigenständig schutzfähige Gegenstand kann durch die mit Bezug auf die Pouchzellenanordnung beschriebenen Merkmale in entsprechender Weise weitergebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel einer erfindungsgemäßen Pouchzellenanordnung;
- Fig.2: ein zweites bevorzugtes Ausführungsbeispiel einer erfindungsgemäßen Pouchzellenanordnung;
- Fig.3: ein drittes bevorzugtes Ausführungsbeispiel einer erfindungsgemäßen Pouchzellenanordnung; und
- Fig.4: ein viertes bevorzugtes Ausführungsbeispiel einer erfindungsgemäßen Pouchzellenanordnung.

### Ausführunasbeispiele:

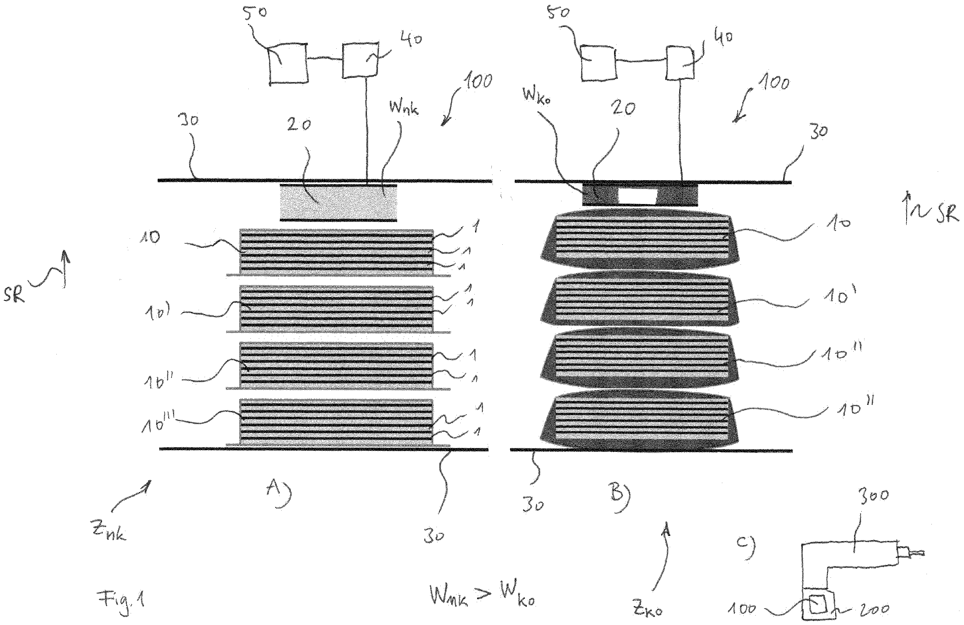

Ein erstes bevorzugtes Ausführungsbeispiel einer erfindungsgemäßen Pouchzellenanordnung 100 ist in Fig. 1 dargestellt. Wie den Figuren 1A) und 1B) entnommen werden kann, weist die Pouchzellenanordnung 100 eine Mehrzahl von Pouchzellen 10, 10', 10", 10'" aufweist. Figur 1A) zeigt die Pouchzellen 10, 10', 10", 10'" im Normalzustand, d.h. sie sind nicht oder allenfalls sehr wenig aufgebläht. Figur 1B) hingegen zeigt die Pouchzellen 10, 10', 10", 10'" im unerwünschten aufgeblähten Zustand (bezogen auf die Stapelrichtung SR). Die Pouch Pouchzellen 10, 10', 10", 10'" weisen jeweils eine Mehrzahl von Einzelzellen 1 auf, die hier sandwichartig gestapelt sind.

Die Pouchzellenanordnung 100 ist beispielhaft Teil eines Akkupacks 200 einer elektrischen Handwerkzeugmaschine 300, die vereinfacht in Figur 1C) dargestellt ist.

Erfindungsgemäß weist die Pouchzellenanordnung 100 wenigstens eine druckempfindliche Sensorfolie 20 auf, die hier beispielhaft als druckempfindliche leitfähige Folie (pressure-sensitive conductive sheet) bereitgestellt ist. Die oberste Pouchzelle 10 ist zumindest abschnittsweise von der Sensorfolie 20 begrenzt, so dass ein Aufblähen der Pouchzelle 10 ein Komprimieren der Sensorfolie 20 in Stapelrichtung SR bewirkt. Die Pouchzellenanordnung 100 weist einen starr ausgebildeten Rahmen 30 auf, wobei die Sensorfolie 20 einerseits gegen den Rahmen 30 und andererseits gegen die oberste Pouchzelle 10 abgestützt ist. Die unterste Pouchzelle 10'" ist ebenfalls gegen den Rahmen 30 abgestützt. Der starr ausgebildete Rahmen bildet somit einen "Gegenanschlag", so dass ein Druckeintrag von einer aufquellenden Pouchzelle 10, 10', 10", 10'" in die Sensorfolie 20 verstärkt wird. Vorliegend weist die Pouchzellenanordnung 100 also eine Mehrzahl von Pouchzellen 10, 10', 10", 10'" auf, denen die gemeinsame Sensorfolie 20 zugeordnet ist.

Durch den Druckeintrag in die Sensorfolie 20 kommt es zu einer Änderung eines elektrischen Widerstands der Sensorfolie 20. In komprimiertem Zustand (Figur 1B) weist die Sensorfolie 10 einen geringeren Schichtwiderstand als in nicht-komprimierten Zustand (Figur 1A) auf. Der Schichtwiderstand Wnk in nicht-komprimierten Zustand Znk ist größer als der Schichtwiderstand Wko in nicht-komprimierten Zustand Zko.

Der Pouchzellenanordnung 100 ein Sensorschaltkreis 40 zugeordnet, mittels dem ein Komprimieren der Sensorfolie 20 detektiert werden kann. Der Sensorschaltkreis 40 ist dabei ausgebildet, eine Änderung des Schichtwiderstands der Sensorfolie 40 elektrisch auszuwerten, wobei die Sensorfolie 40 in komprimiertem Zustand (Figur 1B) einen geringeren Schichtwiderstand Wko als in nicht-komprimierten Zustand (Figur 1A) aufweist.

Der Pouchzellenanordnung 100 ist ebenfalls eine Steuerschaltkreis 50 zugeordnet, der, wenn der Sensorschaltkreis 40 ein Komprimieren der Sensorfolie 20 detektiert hat, eine Stromentnahme aus der Pouchzellenanordnung 100 oder der Pouchzelle 10 unterbricht oder reduziert. Der Steuerschaltkreis 50 wird aktiv, wenn der Schichtwiderstand der Sensorfolie 40 einen vorgegebenen Schwellwert unterschreitet.

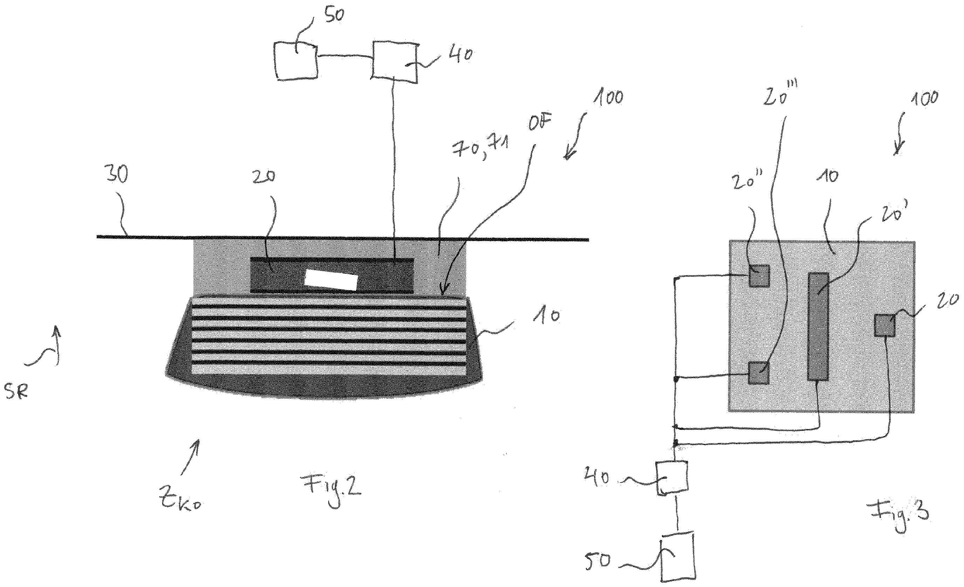

Ein zweites bevorzugtes Ausführungsbeispiel einer erfindungsgemäßen Pouchzellenanordnung 100 mit Sensorfolie 20 ist in Figur 2 dargestellt. Die Pouchzelle 10 ist abschnittsweise von der Sensorfolie 20 begrenzt, so dass ein Aufblähen der Pouchzelle 10 ein Komprimieren der Sensorfolie 20 in Stapelrichtung SR bewirkt. Um einen gleichmäßigen Druck auf die Oberfläche OF der Pouchzelle 10 zu gewährleisten, ist ein Druckausgleichselement 70 vorgesehen, das zwischen der Pouchzelle 10 und der Sensorfolie 20 sandwichartig angeordnet ist, wobei die Sensorfolie 20 ebenfalls in dem Druckausgleichselement 70 eingebettet ist. Das Druckausgleichselement 70 ist beispielhaft als Druckausgleichsfolie 71 bereitgestellt.

Auch beim Ausführungsbeispiel der Figur 2 weist die Pouchzellenanordnung 100 einen starr ausgebildeten Rahmen 30 auf, wobei die Sensorfolie 20 einerseits gegen den Rahmen 30 - dies mittelbar über das Druckausgleichselement 70 - und andererseits gegen die Pouchzelle 10 abgestützt ist.

Ein drittes bevorzugtes Ausführungsbeispiel einer erfindungsgemäßen Pouchzellenanordnung 100 ist in Figur 3 dargestellt. In Figur 3 ist die Pouchzelle 10 in Draufsicht dargestellt. Wie der Figur 3 entnommen werden kann, sind mehrere Sensorfolien 20, 20', 20", 20'" mit unterschiedlicher Größe und mit verschieden Position auf der Oberfläche OF der Pouchzelle 10 vorgesehen. Dies um detaillierte Informationen hinsichtlich einer Druckverteilung auf der Oberfläche OF der Pouchzelle 10 zu erhalten. Alle Sensorfolien 20, 20', 20", 20'" elektrisch mit einem Sensorschaltkreis 40 verbunden, mittels dem ein Komprimieren der Sensorfolie 20 detektiert werden kann. Der Sensorschaltkreis 40, der ausgebildet ist eine Änderung des Schichtwiderstands der Sensorfolie 40 elektrisch auszuwerten, ist wiederum mit einem gemeinsamen Steuerschaltkreis 50 verbunden, über den die Pouchzelle 10 bedarfsweise deaktiviert werden kann.

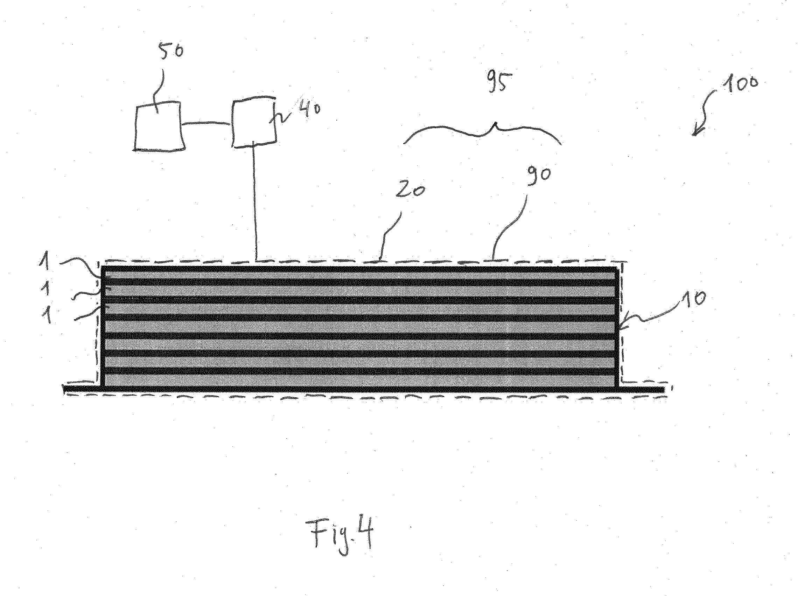

Ein viertes bevorzugtes Ausführungsbeispiel einer erfindungsgemäßen Pouchzellenanordnung 100 mit wenigstens einer Pouchzelle 10 ist in Figur 4 dargestellt. Die Pouchzelle 1 weist ihrerseits eine Mehrzahl von Einzelzellen 1 auf, die hier sandwichartig gestapelt sind. Die Einzelzellen 1 sind in einer Aluminiumverbundfolie 90 - in Figur 4 gestrichelt dargestellt - eingeschweißt. Ebenfalls vorgesehen ist eine Sensorfolie 20, die beispielhaft als druckempfindliche leitfähige Folie (pressure-sensitive conductive sheet) bereitgestellt und in die Aluminiumverbundfolie 90 selbst integriert ist. Die Aluminiumverbundfolie 90 ist hier beispielhaft eine Polyamid-Aluminium-Polypropylen-Verbundfolie, wobei auf die Polypropylen-Schicht eine Industrierußbeschichtetung (carbon black) aufgebracht ist, die Druckabhängigkeit des Schichtwiderstands der Sensorfolie 20 bewirkt. Die Aluminiumverbundfolie 90 mit integrierter Sensorfolie 20 definierten eine gemeinsame Pouchfolie 95. Über den Sensorschaltkreis 40 erfolgt eine Detektion des Schichtwiderstands der Sensorfolie 20. Mittels des Steuerschaltkreises 50 kann eine gewünschte Aktion, beispielsweise eine Reduktion einer Stromentnahme aus der Pouchzellenanordnung 100 bewirkt werden.

Figur 4 zeigt somit die Verwendung einer Sensorfolie 20, in Form einer druckempfindlichen leitfähigen Folie (pressure-sensitive conductive sheet), als Pouchfolie 95 einer Pouchzellenanordnung 100, wobei die Sensorfolie 20 Teil einer Aluminiumverbundfolie 90 ist.

### Bezuaszeichenliste

- 1: Einzelzelle
- 10, 10', 10", 10''': Pouchzellen
- 20, 20', 20", 20''': Sensorfolien
- 30: Rahmen
- 40: Sensorschaltkreis
- 50: Steuerschaltkreis
- 70: Druckausgleichselement
- 71: Druckausgleichsfolie
- 90: Aluminiumverbundfolie
- 95: Pouchfolie
- 100: Pouchzellenanordnung
- 200: Akkupack
- 300: elektrische Handwerkzeugmaschine

- OF: Oberfläche
- SR: Stapelrichtung
- Wnk: Schichtwiderstand nicht-komprimierter Zustand
- Wko: Schichtwiderstand komprimierter Zustand
- Znk: nicht-komprimierter Zustand
- Zko: komprimierter Zustand

## Patentansprüche

1. Pouchzellenanordnung (100) mit wenigstens einer Pouchzelle (10),
**dadurch gekennzeichnet, dass** die Pouchzellenanordnung (100) wenigstens eine druckempfindliche Sensorfolie (20), insbesondere eine druckempfindliche leitfähige Folie (pressure-sensitive conductive sheet) aufweist, die die Pouchzelle (10) zumindest abschnittsweise derart umgibt oder begrenzt, dass ein Aufblähen der Pouchzelle (10) ein Komprimieren der Sensorfolie (20) und somit eine Änderung eines elektrischen Widerstands der Sensorfolie (20) bewirkt.

2. Pouchzellenanordnung (100) nach Anspruch 1,
**dadurch gekennzeichnet, dass** die Pouchzellenanordnung (100) einen starr ausgebildeten Rahmen (30) aufweist, wobei die Sensorfolie (20) einerseits gegen den Rahmen (30) und andererseits gegen die Pouchzelle (10) abgestützt ist.

3. Pouchzellenanordnung (100) nach Ansprüche 1 oder 2,
**dadurch gekennzeichnet, dass** die Pouchzellenanordnung (100) ein Druckausgleichselement (70) aufweist, das zumindest zwischen der Pouchzelle (10) und der Sensorfolie (20) sandwichartig angeordnet ist.

4. Pouchzellenanordnung (100) nach einem der vorangehenden Ansprüche,
**dadurch gekennzeichnet, dass** eine Mehrzahl von Sensorfolien (20, 20', 20") vorgesehen ist.

5. Pouchzellenanordnung (100) nach einem der vorangehenden Ansprüche,
**dadurch gekennzeichnet, dass** die Sensorfolie (20) Teil einer Aluminiumverbundfolie (90) ist in die die Pouchzelle (10) eingeschweißt ist.

6. Pouchzellenanordnung (100) nach einem der vorangehenden Ansprüche,
**dadurch gekennzeichnet, dass** die Pouchzellenanordnung (100) ein Sensorschaltkreis (40) zugeordnet ist, mittels dem ein Komprimieren der Sensorfolie (20) detektiert werden kann, wobei der Sensorschaltkreis (40) vorzugsweise von der Pouchzellenanordnung (100) umfasst ist.

7. Pouchzellenanordnung (100) nach einem der vorangehenden Ansprüche,
**dadurch gekennzeichnet, dass** die Pouchzellenanordnung (100) einen Steuerschaltkreis (50) zugeordnet ist, der, wenn der Sensorschaltkreis (40) ein Komprimieren der Sensorfolie (20) detektiert hat, eine Stromentnahme aus der Pouchzellenanordnung (100) oder der Pouchzelle (10) unterbricht oder reduziert, wobei der Steuerschaltkreis (50) vorzugsweise von der Pouchzellenanordnung (100) umfasst ist.

8. Pouchzellenanordnung (100) nach einem der vorangehenden Ansprüche,
**dadurch gekennzeichnet, dass** die Pouchzellenanordnung (100) eine Mehrzahl von Pouchzellen (10, 10', 10", 10"') aufweist, die jeweils von einer eigenen Sensorfolie (20) umgeben oder begrenzt sind.

9. Pouchzellenanordnung (100) nach einem der Ansprüche 1 bis 7,
**dadurch gekennzeichnet, dass** die Pouchzellenanordnung (100) eine Mehrzahl von Pouchzellen (10, 10', 10", 10'") aufweist, denen eine gemeinsame Sensorfolie (20) zugeordnet ist.

10. Akkupack (200) einer elektrischen Handwerkzeugmaschine (300) mit wenigsten einer Pouchzellenanordnung (100) nach einem der vorangehenden Ansprüche.

11. Verwendung einer Sensorfolie (20), insbesondere einer druckempfindlichen leitfähigen Folie (pressure-sensitive conductive sheet) als Pouchfolie (95) einer Pouchzellenanordnung (100), wobei die Sensorfolie (20) vorzugsweise Teil einer Aluminiumverbundfolie (90) ist.
